Europäisches Patentamt

(19) European Patent Office

Office européen des brevets

(11) Publication number: 0 113 498
A1

(12) **EUROPEAN PATENT APPLICATION**

(21) Application number: 83304986.9

(22) Date of filing: 30.08.83

(51) Int. Cl.³: **B 29 D 7/24**

(30) Priority: 30.09.82 US 429691
16.08.83 US 523984

(43) Date of publication of application:
18.07.84 Bulletin 84/29

(84) Designated Contracting States:
BE CH DE FR GB IT LI NL SE

(71) Applicant: RADIATION DYNAMICS INC.
316 South Service Road Melville
Long Island, New York 11746(US)

(72) Inventor: Bradley, Richard
56 Fort Avenue
Medford New York 11763(US)

(74) Representative: Hayward, Denis Edward Peter et al,
Lloyd Wise, Tregear & Co. Norman House 105-109 Strand
London WC2R OAE(GB)

(54) Method for manufacturing heat recoverable tubing.

(57) A method of manufacturing heat recoverable tubing by
(a) extruding pellets of a heat shrinkable, heat sealable
plastic into a sheet; (b) cross-linking the sheet with electron
beam or alternative form of radiation; (c) orienting the
irradiated sheet by stretching the sheet widthwise; and (d)
forming the oriented sheet into a tube about a longitudinal
axis. The tube is longitudinally seamed, and is formed as
either a continuous tube or a discreet length of tube. The
surface of the sheet which becomes the inner surface of the
tube when the tube is formed, can be coated before the tube
is formed. Tubes of any diameter may be formed by the
method of the invention.

FIG. 2

Croydon Printing Company Ltd.

# METHOD FOR MANUFACTURING HEAT RECOVERABLE TUBING

This invention relates to the manufacture of heat recoverable tubing.

Heat recoverable tubing has been used in many applications, such as for covering or wrapping cable, pipe, wire, or other elongated articles. In these various applications, the tubing may be used as protection against the environment or as a structural element for effecting coupling or strengthening the covered article. A specific use of particular importance is covering welds in pipes, which may run as large as 60 inches or more in diameter, to protect the welds against corrosion. Accordingly, it is generally desired that the tubing fit tightly about the article, and oftentimes, it is desired that the inner surface of the tubing be coated with an adhesive or the like.

In the applications set forth above, the diameter of the tube prior to application to the pipe, cable, etc. is from 1.5 to 2.0 times the diameter of the pipe. The larger the pipe, the greater the ratio of expansion; the reason being the difficulty of slipping a relatively long tube over a large diameter object. In use with a 60" diameter pipe, a tube of 120" is employed and is subsequently heated to cause the tube to shrink tightly about the pipe.

In the past, heat recoverable tubes were manufactured by irradiating, expanding, and coating the inner surface of a pre-formed tube. Such methods, however, have displayed various shortcomings. First, there are problems in applying radiation uniformly to a pre-formed tube. Second, it is difficult to uniformly stretch or orient a pre-formed tube. Third, coating the inner surface of a pre-formed tube may be difficult. And, fourth, the size of the pre-formed tube may be limited due to the size or characteristics of the irradiation source or coating device or due to inherent limitations imposed by the tube-forming technique itself. Large size tubes, such as 60 inches, could not be made, the upper limit of pre-formed tubes with wall thicknesses of 0.1" to 0.15" was 15" to 20" diameter, employing the largest commercially available accelerators; i.e., 4.5 MEV. Larger sizes could not be fabricated and coverings were formed by taking sheets into the field and seaming them about the pipe; a very cumbersome and difficult process.

It has been suggested that pipes could be plastic covered by forming a tube from pre-irradiated, pre-stretched sheet material by forming the sheet into a tube about a hollow mandrel, heat sealing the edges on the mandrel and paying off the tube onto a pipe passing coaxially through the mandrel. Such a device forms the subject matter of U.S. Patent No. 4,134,782. There are several difficulties with such approach. First, at the time of filing such patent, October 1975, a heat sealable, heat shrinkable material did not exist. The first such material was a composition of polyethylene and isobutylene copolymer patented in 1981; U.S. Patent No. 4,264,490. The material is sold under the Omni-Shrink trademark. Second, a mandrel of 10' in diameter (120") is impractical, and it is highly improbable that a continuous tube of film of such size can be made by the method disclosed in the aforesaid U.S. Patent No. 4,134,782. Further, the pipe covering method disclosed in that patent must be practiced in a manufacturing plant and is not susceptible to field use.

The manufacturing of heat recoverable tubes, especially those requiring the application of a coating on the inner surface thereof, has thus been limited in the past by a number of problems and disadvantages.

It is an object of the present invention to alleviate the above-described problems of forming heat recoverable tubing.

According to the invention, there is provided a method of manufacturing heat recoverable tubing comprising the steps of:

producing a sheet of heat shrinkable heat sealable material having a width w;

stretching the sheet to a width w'; and

passing the opposed edges only of the sheet through a sealing mechanism to self-bond the edges of the sheet together and produce a tube of such material.

In a preferred embodiment, the method comprises the extrusion of a sheet, the irradiation of the material while in sheet form stretching in width, and if desired, applying of a coating to a sheet of heat shrinkable material before the sheet is formed into a tube shape. That is, the irradiating, orienting, and coating applying are performed on a flat sheet where such steps are greatly facilitated and less subject to limitations. The flat sheet may be formed into a tube of defined or indefinite length. If formed into a tube of defined length, the sheet is cut to the desired length, and the edges in the stretched direction are overlapped on a welding or heat sealing bar. The rest of the sheet simply hangs from the bar, and its shape is not defined.

If a tube of indefinite length is to be made, the edges are bonded; for instance, the lap-seal bond disclosed in U.S. Patent No. 4,287,011, may be employed. In any event, it is not required to have an anvil, mandrel or bar inserted in the tube, and thus tubes of indefinite lengths may be formed.

The method of the present invention, therefore, contemplates extruding a sheet of heat shrinkable, heat sealable material, irradiating it to impart heat shrink characteristics to such, and stretching the sheet transverse to its longitudinal dimension to increase such dimension preferably by at least 1.5 - 2.0 times original width. The sheet may then be coated, if desired. If short lengths of tubing are to be made, the sheet is cut and individual tubes fabricated. If tubes of indefinite length are to be made, the stretched sheet has its longitudinal edges bonded on a continuous basis.

The sleeves are then taken to the field, and when to be used, are slipped over a pipe, cable or the like, and heated to cause shrinkage, and if coated, bonding.

The invention thus aims to facilitate the forming of heat recoverable tubing, and further to provide a method of forming heat recoverable tubing which can have any of various radii and especially very large radii in the 60" diameter range. The tubing can be of a fixed length or of indefinite length formed from a continuous length of sheet without the use of size limiting mandrels or the like. It can also be formed from a sheet extruded from pellets.

The implementation of the invention will now be described in more detail with reference to the accompanying drawings in which:-

Figure 1 is a diagram illustrating an embodiment of the invention for manufacturing an indefinite length of tubing.

Figure 2 illustrates a device for forming indefinite lengths of tubing.

Figure 3 is a diagram illustrating an alternative embodiment of the invention for manufacturing discreet lengths of tubing.

Figure 4 illustrates an alternative form of tube forming apparatus useful with sheets of discreet lengths.

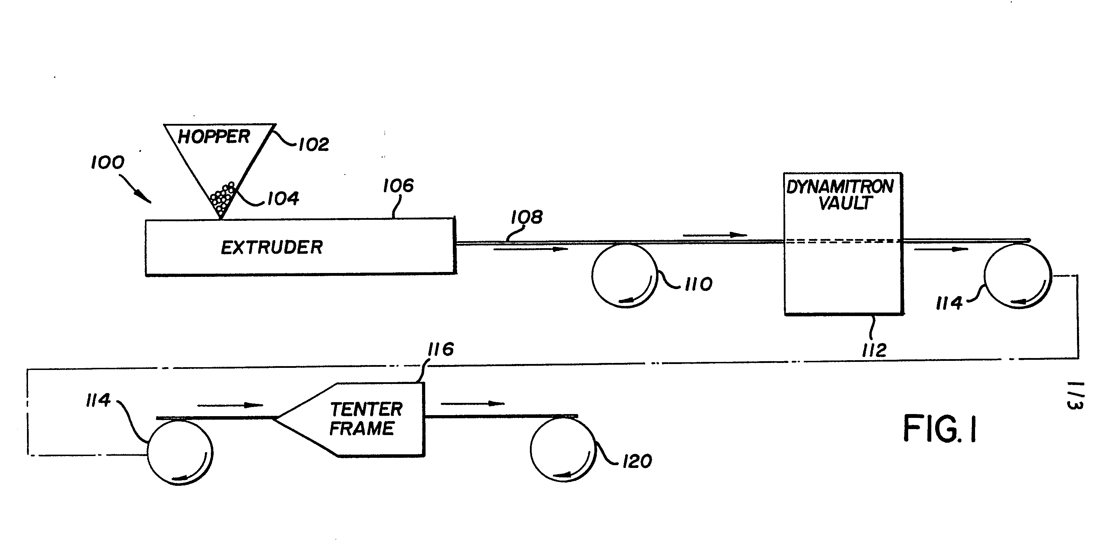

Referring to Figure 1, apparatus 100 for manufacturing heat recoverable tubing is illustrated.  A hopper 102 feeds pellets 104 (or material of like characteristics) into a conventional plastics extruder 106.  The pellets 104 are made preferably of heat sealable, heat recoverable resin, or the like, which can be heat sealed or ultrasonically bonded to itself.  For example, the pellets 104 may comprise a material based, in whole or in part, on copolymers of ethylene vinyl acetate or preferably elastomer/polyethylene blends which are suited for heat recoverable, heat sealable articles.

The extruder 106 produces a sheet 108 of material which may be a selected thick or thin sheet, depending on the size of the member to be covered.  Optionally, a coating may be coextruded with the sheet 108, providing a top layer thereon.  A roller 110 advances the extruded sheet 108 into a cross-linking chamber 112 to effect cross-linking, by any of various known techniques.  For example, the cross-linking may be effected by, preferably, irradiating the sheet 108 with an electron beam from a high voltage accelerator such as a Dynamitron®.

If not coated by coextrusion, a coating may alternatively be applied to the sheet 108 at some other time before the sheet 108 is rolled into a tubular form. For example, a coating may be applied to the upper surface of the sheet 108 after cross-linking in the chamber 112. Preferably, the coating is selectively applied to the upper surface, leaving longitudinal edge portions of the sheet 108 uncoated. The coating may constitute an acrylate modified polyethylene adhesive, or a Norton Company adhesive marketed as Novatherm 415, or some other conventional coating.

The sheet 108, although preferably flat, may have a slightly curved or other transverse cross-section provided that the upper and lower sheet surfaces are directly exposable to cross-linking.

After being oriented, the sheet 108 is further advanced by roller 114 to be stretched by a tenter frame 116 in the width direction. Specifically, the width is stretched from an unstretched dimension of w to a wider dimension w'. The stretching is to a selected degree, which may be as large as 500%, but is at least 150%. The tenter frame 116 -- which may also be a longitudinal stretcher such as that manufactured by the Marshall and Williams Company of Providence, Rhode Island -- preferably stretches the oriented sheet 108 in only the transverse, or widthwise, dimension. The stretched sheet 108 is then paid onto a cylinder 120, if desired.

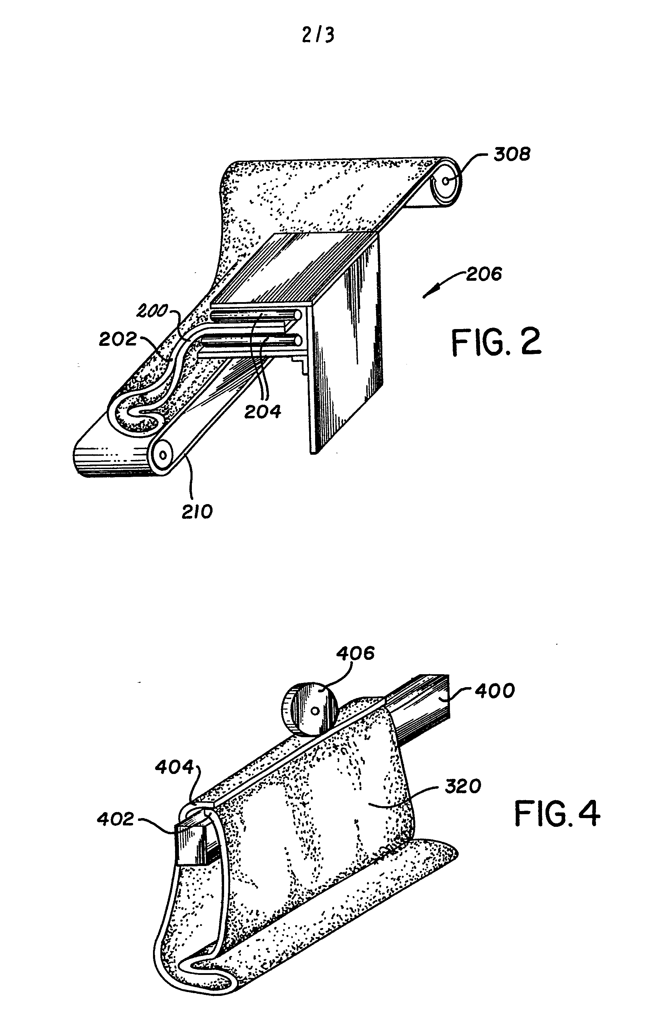

When indefinite lengths of tubing are to be formed, and reference is made to Figure 2 of the accompanying drawings, two edge regions 200 and 202 of the sheet 108 are brought into contact between a series of rollers 204, (only the first two of which are illustrated), of a continuous feed, heat sealing device 206. The rollers 204 are heated to the sealing temperature of the plastic so that when the plastic emerges from the sealer 206, the tubing has been formed and may be rolled up on a power driven roller 208. The material may then be shipped to the field for use.

It will be noted that tubes of virtually any desired diameter may be formed since the heat sealer 206 permits the excess length (if any) to hang down and be transported along a conveyor 210 or series of rollers as desired. Tubes of 10' to 15' and more may readily be formed so that the equipment imposes no limits on the size of the tubes formed and, equally important, the same tube forming equipment may be employed for virtually all sizes of tubes.

As indicated above, the lap-seal of Patent No. 4,264,490 may also be employed. In such case, the sealer 206 of Figure 2 is preceded by a folder to cause a section of one edge to be folded over the other prior to sealing.

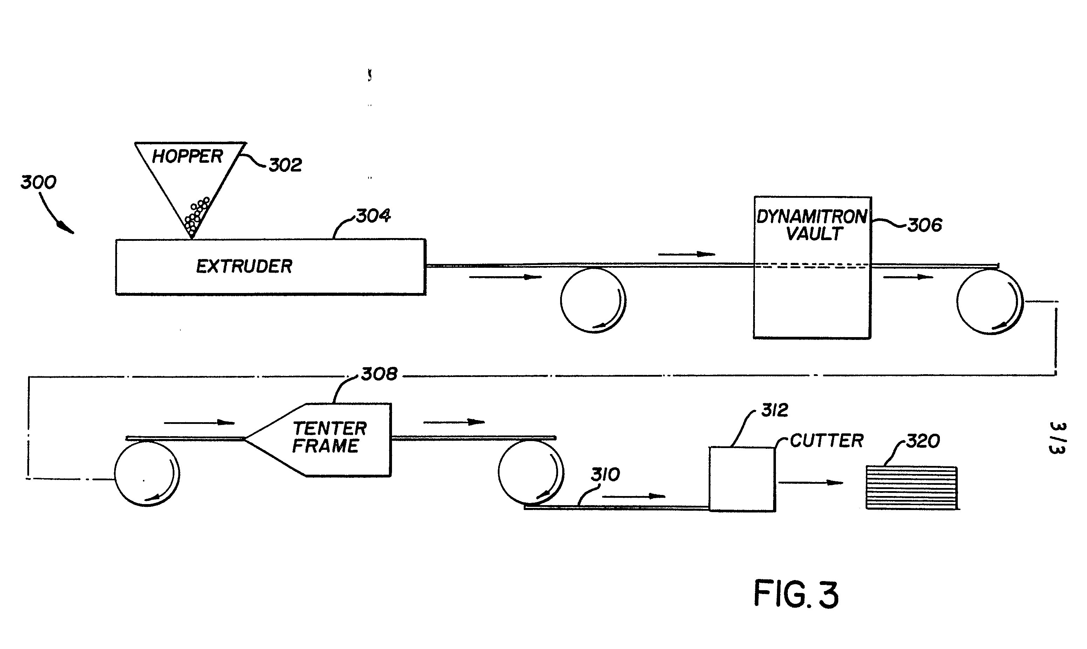

Referring to Figure 3, apparatus 300 is used to manufacture discreet lengths of heat recoverable tubing. The apparatus 300 is like apparatus 100, including a hopper 302, an extruder 304, a cross-linking chamber 306, a tenter frame 308, and a coating applicator located as desired. Following the widthwise stretching in the tenter frame 308, the indefinite length sheet 310 enters a sheet cutter 312. The sheet cutter 312 divides the indefinite length sheet into discreet lengths 320 of sheet.

Optionally, the discreet lengths 320 may be fed either manually or automatically to a heat sealer which may take the form of the sealer of Figure 2; alternatively, a sealer of the type illustrated in Figure 4 may be employed. In such a device, one of the sheets 320 is disposed about a bar 400 with edges 402 and 404 of the sheet overlapped on top of the bar. Sealing heat is then applied by a heated roller 406 or an elongated plate (not illustrated) depending on the length of the sheets, their thickness, the sealing temperature, etc.

Another sealer that may be employed is the Thermal Impulse Heat Sealer, Model 14P/CAN or 30P/CAN, manufactured by the Vertrod Corporation of Brooklyn, New York. This device provides a pair of vertically aligned, elongated, heated anvil-like jaws with the upper jaw vertically articulatable. This device may also be modified by replacing the anvil surfaces with elongated rollers for use in continuous production contemplated in Figure 1.

In the method of Figures 3 and 4, there is again no limitation on the diameter of the tubes formed. The tube formers and sealers only manipulate the edges of the sheets; the remaining part not being required to be supported or accommodated by the tube forming apparatus may hang to the floor as illustrated.

CLAIMS:-

0113498

1. A method of manufacturing heat recoverable tubing comprising the steps of:

producing a sheet of heat shrinkable heat sealable material having a width w;

stretching the sheet to a width w'; and

passing the opposed edges only of the sheet through a sealing mechanism to self-bond the edges of the sheet together and produce a tube of such material.

2. A method as in claim 1 wherein the tube forming step comprises the step of:

forming the indefinite stretched sheet into a length of tubing with the circumference of the tubing corresponding to the width of the stretched sheet.

3. A method as in claim 2 wherein the coupling step comprises the step of:

bonding the longitudinal edges with an ultrasonic sewing device.

4. A method as in claim 2 wherein the coupling step comprises the step of:

heat sealing the longitudinal edges.

5. A method as in claim 1 wherein the sheet producing step comprises the step of:

expanding the sheet to a width at least 1.5w.

6. A method as in claim 1 wherein the cross-linking step comprises the step of:

irradiating the produced sheet with electrons.

7.  A method as in claim 1 comprising the further step of:

 applying a coating to the sheet surface that corresponds to the inner surface of the tubular structure, the applying step preceding the sealing step.

8.  A method as in claim 7 wherein the extruding and coating applying steps comprise the step of:

 coextruding heat shrinkable pellets and coating material together into a multi-layer sheet.

9.  A method as in claim 7 wherein the coating applying step comprises the step of:

 applying an adhesive coating.

10.  A method as in claim 7 wherein the coating applying step comprises the step of:

 selectively applying a coating to a longitudinal strip of the sheet between two longitudinal edge portions of the sheet, both of which are uncoated.

11.  A method of manufacturing heat recoverable tubing comprising the steps of:

 producing an indefinite length sheet of heat shrinkable material having a width w;

 cross-linking the produced sheet;

 stretching the cross-linked sheet to a width w';

 cutting the indefinite length stretched sheet into discreet sheet lengths; and

forming the discreet sheet lengths into discreet tubular lengths, the circumference of which corresponds to the width w'.

12.    A method as in claim 11 wherein the step of forming the tube comprises passing only the contacting parallel edge regions of the sheet through a heat sealer. wherein the edge regions are heated to the self-sealing temperature of the material.

HOPPER _102_

_100_

_104_

_106_

EXTRUDER

_108_

DYNAMITRON
VAULT

_110_

_114_

_112_

_116_

_114_

TENTER
FRAME

_120_

_113_

FIG. I

FIG. 2

FIG. 4

FIG.3

0113498

# EUROPEAN SEARCH REPORT

European Patent Office

| | DOCUMENTS CONSIDERED TO BE RELEVANT | | EP 83304986.9 |

| Category | Citation of document with indication, where appropriate, of relevant passages | Relevant to claim | CLASSIFICATION OF THE APPLICATION (Int. Cl. ³) |
|---|---|---|---|
| A | GB - A - 1 060 088 (BASF) <br> * Totality * | 1,2,4 6,11, 12 | B 29 D 7/24 |
| A | GB - A - 1 166 630 (HOECHST) <br> * Totality * | 1,5,7 | |
| A | GB - A - 1 075 824 (SMITH) <br> * Totality * | | |
| A | DE - A - 1 479 922 (ALKOR) <br> * Totality * | | |
| A,D | US - A - 4 134 782 (STRAUGHAN) <br> * Totality * | | **TECHNICAL FIELDS SEARCHED (Int. Cl. ³)** |
| A,D | US - A - 4 287 011 (DERBYSHIRE) <br> * Totality * | | B 29 C <br> B 29 D <br> C 08 K |
| A,D | US - A - 4 264 490 (BEREJKA) <br> * Totality * <br> ---- | | |

The present search report has been drawn up for all claims

| Place of search | Date of completion of the search | Examiner |
|---|---|---|
| VIENNA | 11-04-1984 | MAYER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82